# EUROPEAN PATENT APPLICATION

(11) **EP 3 228 408 A1**
(43) Date of publication of application: **11.10.2017**
(21) Application number: 16164310.1
(22) Date of filing: 07.04.2016
(51) Int. Cl.: B23B 31/107, B25B 23/00, B25B 23/12, B27G 15/00

(54) **QUICK-CHANGE CONNECTING ROD ASSEMBLY**

(71) Applicant: Compass Corporation, Tainan City (TW)
(72) Inventor: Wang, Tzu-Chien, Tainan City (TW)
(74) Representative: Lang, Christian

(57) **Abstract**

A quick-change connecting rod assembly iis proposed including a connecting rod (1) having a front end with a coupling hole (11). Two diametrically opposed coupling grooves (113) are defined in a polygonal inner periphery of the coupling hole (11). The connecting rod further includes first and second radial holes (13, 14) respectively receiving first and second positioning balls (131, 141). A first abutment ring (17) is mounted around the connecting rod (1) and is located between the first and second radial holes (13, 14). A pressing seat (21) is received in a rear portion of the coupling hole (11) and includes a receptacle (211) receiving a magnet (22) and a pressing portion (213) for pressing against the second positioning ball (141). A sleeve (31) receives the front end of the connecting rod (1) and includes an inclined face (312) for pressing against the first positioning ball (131). A rear abutment (32) ring is fixed in the receiving hole (311) and includes a side stop (322) wall for pressing against the second positioning ball (141).

## Description

### BACKGROUND OF THE INVENTION

The present invention relates to a quick-change connecting rod assembly and, more particularly, to a quick-change connecting rod assembly for coupling with woodworking spade bits, polygonal bits, or screwdriver bits to provide wider applications while providing better assembly and operational stability.

Bits have various shapes, and a type of them includes a front end having a helical drilling end and a rear end having a polygonal column for coupling with a manual, pneumatic, or electric external tool.

To permit easy coupling, a connecting rod is mounted to an output end of the external tool. The connecting rod includes a front end having a polygonal hole for coupling with the polygonal column of a bit. Thus, a user can rapidly change bits of different sizes for drilling holes of different diameters without adjusting the output end of the external tool.

A typical woodworking spade bit (or a wood flat drill bit) includes a front drilling end and a rear, flat shank portion. The width of the front drilling end corresponds to the diameter of the hole to be drilled. However, the polygonal hole of the connecting rod cannot couple with the shank portion of the woodworking spade bit, failing to provide better application.

U.S. 20090269155 A1 discloses a wood flat drill bit for coupling with a connecting rod. The wood flat drill bit includes a drilling end, and the other end of the wood flat drill bit is processed to form an angular end which is hexagonal in cross section. The connecting rod includes an end having a recess for coupling with the angular end of the wood flat drill bit. A spring and a steel ball are mounted to the connecting rod to permit rapid coupling with the wood flat drill bit.

However, the processing on the flat rear end of the flat drill bit to form the angular end having a diameter larger than the thickness of the wood flat drill bit is difficult and expensive in costs. Furthermore, the connecting rod is only suitable for coupling with the wood flat drill bit. Furthermore, the wood flat drill bit and the connecting rod are merely positioned by the steel ball, which is unsatisfactory in the engagement stability.

### BRIEF SUMMARY OF THE INVENTION

The primary objective of the present invention is to provide a quick-change connecting rod assembly for coupling with woodworking spade bits, polygonal bits, or screwdriver bits to provide wider applications.

Another objective of the present invention is to provide quick-change connecting rod assembly with better assembly and operational stability.

A quick-change connecting rod assembly according to the present invention includes a connecting rod having an outer periphery. The connecting rod includes a front end having a coupling hole. The connecting rod further includes a rear end having a shank. The coupling hole of the connecting rod includes a front portion and a rear portion. The front portion of the coupling hole includes a polygonal inner periphery having a plurality of inner wall faces and a plurality of corners. Two coupling grooves are defined in the polygonal inner periphery of the coupling hole and are diametrically opposed to each other. Each of the two coupling grooves includes two sidewalls and a bottom wall between the two sidewalls. The front end of the connecting rod includes a first radial hole intercommunicated with one of the two coupling grooves. The connecting rod further includes a second radial hole located behind the first radial hole and intercommunicated with the rear portion of the coupling hole. First and second positioning balls are respectively received in the first and second radial holes. A first abutment ring is mounted around the connecting rod and is located between the first and second radial holes.

The quick-change connecting rod assembly further includes a pressing device having a pressing seat, a magnet, and a first spring. The pressing seat is received in the rear portion of the coupling hole. The pressing seat includes a front end having a receptacle. The front end of the pressing seat further includes a recessed portion formed on an outer periphery thereof delimiting the receptacle and extending rearwards. The pressing seat further includes a pressing portion behind the recessed portion and configured for pressing against the second positioning ball. The magnet is mounted in the receptacle of the pressing seat. The first spring provides elasticity for moving the pressing seat.

The quick-change connecting rod assembly further includes a sleeve device having a sleeve, a rear abutment ring, and a second spring. The sleeve includes a receiving hole in a central portion thereof. The front end of the connecting rod is received in the receiving hole of the sleeve. The receiving hole includes a front portion having an inner periphery with an inclined face configured for pressing against the first positioning ball. The rear abutment ring is fixed in a rear portion of the receiving hole. The rear abutment ring includes a front side having a front stop wall. The rear abutment ring further includes an inner periphery having a side stop wall configured for pressing against the second positioning ball. The inner periphery of the rear abutment ring further includes a recess configured for receiving a portion of the second positioning ball. The second spring provides elasticity for moving the sleeve.

The coupling hole of the connecting rod can be hexagonal in cross section, and the two coupling grooves are defined in two diametrically corners of the plurality of corners.

The connecting rod can be connected to a woodworking spade bit, a polygonal bit, or a screwdriver bit.

The woodworking spade bit can be elongated and can include a drilling end on a front end thereof and a flat coupling end behind the drilling end. The flat coupling end includes two opposite wide faces and two opposite narrow faces. Each of the two opposite wide faces has a width slightly smaller than a spacing between the bottom walls of the two coupling grooves. Each of the two opposite narrow faces has a width slightly smaller than a width of each of the two sidewalls of one of the two coupling grooves. At least one of the two opposite narrow faces includes a notch configured for receiving the first positioning ball. The flat coupling end of the woodworking spade bit is detachably inserted into the coupling hole of the connecting rod. Two edges of the flat coupling end of the woodworking spade bit engage in the two coupling grooves of the connecting rod.

The polygonal bit can include a drilling end on a front end thereof. The screwdriver bit can include a bit end on a front end thereof. Each of the polygonal bit and the screwdriver bit can include a polygonal coupling end on a rear end thereof for coupling with the coupling hole of the connecting rod. The polygonal coupling end includes an engagement groove for coupling with the first positioning ball.

Each of the first and second positioning balls can be a steel ball. The recessed portion of the pressing seat can include a notch intercommunicated with the receptacle. The magnet received in the receptacle of the pressing seat has a side exposed via the notch.

The pressing seat can further include an inclined guiding face located between the recessed portion and the pressing portion and inclining rearwards and radially outwards.

The rear abutment ring can further include a front inclined guiding face in front of the recess of the rear abutment ring.

The coupling hole of the connecting rod can have increasing diameters towards the front end of the connecting rod 1 and including a shoulder.

The connecting rod can further include a groove in the outer periphery thereof. The first abutment ring is received in the groove of the connecting rod. The receiving hole of the sleeve can include a receiving section behind the inclined face of the sleeve. The receiving section has a diameter larger than the front portion of the receiving hole. The second spring is received in the receiving section and includes two ends abutting the first abutment ring and the front stop wall of the rear abutment ring. The pressing seat can be made of plastic. An end of the first spring can be integrally formed with the pressing seat. The other end of the first spring abuts a bottom wall of the coupling hole of the connecting rod.

The present invention will become clearer in light of the following detailed description of illustrative embodiments of this invention described in connection with the drawings.

### DESCRIPTION OF THE DRAWINGS

FIG. 1 is an exploded, perspective view of a quick-change connecting rod assembly according to the present invention.
FIG. 2 is a cross sectional view of the quick-change connecting rod assembly of FIG. 1 after assembly.
FIG. 3 is a perspective view of the quick-change connecting rod assembly of FIG. 1, two woodworking spade bits, two polygonal bits, and a screwdriver bit.
FIG. 4 is a cross sectional view illustrating coupling of the quick-change connecting rod assembly and a woodworking spade bit.
FIG. 5 is a front elevational view of the quick-change connecting rod assembly and the woodworking spade bit.
FIG. 6 is a cross sectional view illustrating detachment of the woodworking spade bit from the quick-change connecting rod assembly.
FIG. 7 is a cross sectional view illustrating coupling of the quick-change connecting rod assembly and a polygonal bit.
FIG. 8 is another cross sectional view of the quick-change connecting rod assembly and the polygonal bit of FIG. 7.

### DETAILED DESCRIPTION OF THE INVENTION

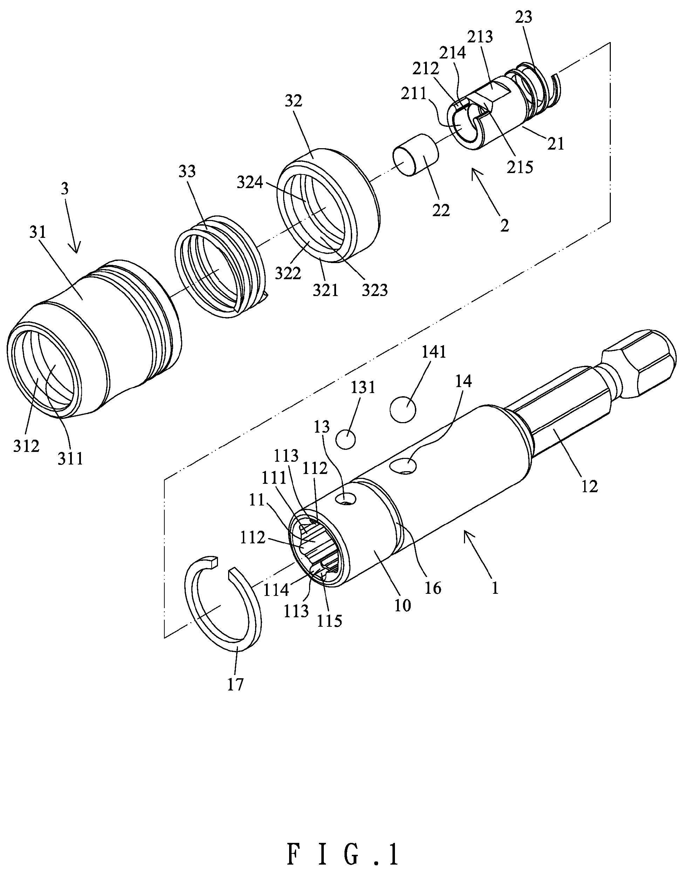

With reference to FIGS. 1-3, a quick-change connecting rod assembly according to the present invention can be coupled with a woodworking spade bit 4, a polygonal bit 5, or a screwdriver bit 6. The quick-change connecting rod assembly includes a connecting rod 1, a pressing device 2, and a sleeve device 3. The connecting rod 1 includes an outer periphery 10 and a front end having a coupling hole 11. The connecting rod 1 further includes a rear end having a shank 12 for coupling with an external tool (not shown). At least a front portion of the coupling hole 11 of the connecting rod 1 is hexagonal in cross section and includes six inner wall faces 111 and six corners 112. Two coupling grooves 113 are defined in two diametrically corners 112. Each of the two coupling grooves 113 includes two sidewalls 114 and a bottom wall 115 between the two sidewalls 114. The front end of the connecting rod 1 includes a first radial hole 13 intercommunicated with one of the two coupling grooves 113. The connecting rod 1 further includes a second radial hole 14 located behind the first radial hole 13 and intercommunicated with a rear portion of the coupling hole 11. First and second positioning balls 131 and 141 are respectively received in the first and second radial holes 13 and 14. Each of the first and second positioning balls 131 and 141 can be a steel ball. The coupling hole 11 of the connecting rod 1 has increasing diameters towards the front end of the connecting rod 1 and includes a shoulder 15 for abutting a rear end of a woodworking spade bit 4, a polygonal bit 5, or a screwdriver bit 6. The connecting rod 1 further includes a groove 16 in the outer periphery 10 thereof. A first abutment ring 17 is received in the groove 16 and is located between the first and second radial holes 13 and 14.

The pressing device 2 includes a pressing seat 21, a magnet 22, and a first spring 23. The pressing seat 21 is received in the rear portion of the coupling hole 11 and is made of plastic. The pressing seat 21 includes a front end having a receptacle 211. The front end of the pressing seat 21 further includes a recessed portion 212 formed on an outer periphery thereof delimiting the receptacle 211 and extending rearwards. The pressing seat 21 further includes a pressing portion 213 behind the recessed portion 212 and configured for pressing against the second positioning ball 141. In this embodiment, the recessed portion 212 includes a notch 214 intercommunicated with the receptacle 211. The pressing seat 21 further includes an inclined guiding face 215 located between the recessed portion 212 and the pressing portion 213 and inclining rearwards and radially outwards. The magnet 22 is mounted in the receptacle 211 of the pressing seat 21 and has a side exposed via the notch 214. An end of the first spring 23 is integrally formed with a rear end of the pressing seat 21. The other end of the first spring 23 abuts a bottom wall of the coupling hole 11 of the connecting rod 1. The first spring 23 provides elasticity for moving the pressing seat 21. The integral formation of the first spring 23 and the pressing seat 21 reduces the components and provides stable movement during operation.

The sleeve device 3 includes a sleeve 31, a rear abutment ring 32, and a second spring 33. The sleeve 31 includes a receiving hole 311 in a central portion thereof. The front end of the connecting rod 1 is received in the receiving hole 311 of the sleeve 31. The receiving hole 311 includes a front portion having an inner periphery with an inclined face 312 configured for pressing against the first positioning ball 131. The receiving hole 311 of the sleeve 31 includes a receiving section 313 behind the inclined face 312 of the sleeve 31. The receiving section 313 has a diameter larger than the front portion of the receiving hole 311. The rear abutment ring 32 is fixed in a rear portion of the receiving hole 311. The rear abutment ring 32 includes a front side having a front stop wall 321. The rear abutment ring 32 further includes an inner periphery having a side stop wall 322 configured for pressing against the second positioning ball 141. The inner periphery of the rear abutment ring 32 further includes a recess 323 configured for receiving a portion of the second positioning ball 141. The second spring 33 is received in the receiving section 313 and includes two ends abutting the first abutment ring 17 and the front stop wall 321 of the rear abutment ring 32. The rear abutment ring 32 further includes a front inclined guiding face 324 in front of the recess 323. The second spring 33 providing elasticity for moving the sleeve 31.

The woodworking spade bit 4 is elongated and includes a drilling end 41 on a front end thereof and a flat coupling end 42 behind the drilling end 41. The flat coupling end 42 includes two opposite wide faces 421 and two opposite narrow faces 422. Each of the two opposite wide faces 421 has a width slightly smaller than a spacing between the bottom walls 115 of the two coupling grooves 113. Each of the two opposite narrow faces 422 has a width slightly smaller than a width of each of the two sidewalls 114 of one of the two coupling grooves 113. Each of the two opposite narrow faces 422 includes a notch 423 configured for receiving the first positioning ball 131.

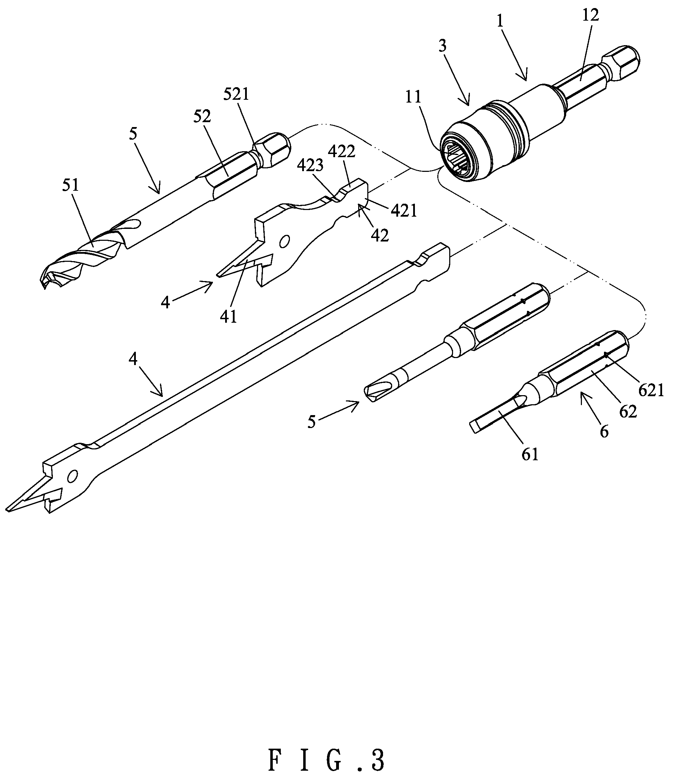

The polygonal bit 5 and the screwdriver bit 6 can be of products with standard specifications. The polygonal bit 5 includes a drilling end 51 on a front end thereof. The screwdriver bit 6 includes a bit end 61 on a front end thereof. Each of the polygonal bit 5 and the screwdriver bit 6 includes a polygonal coupling end 52, 62 on a rear end thereof for coupling with the coupling hole 11 of the connecting rod 1. The polygonal coupling end 52, 62 includes an engagement groove 521, 621 for coupling with the first positioning ball 131. FIG. 3 merely illustrate examples of woodworking spade bits 4, polygonal bits 5, and screwdriver bits 6. Tools of other types and shapes different from those shown in FIG. 3 can be used.

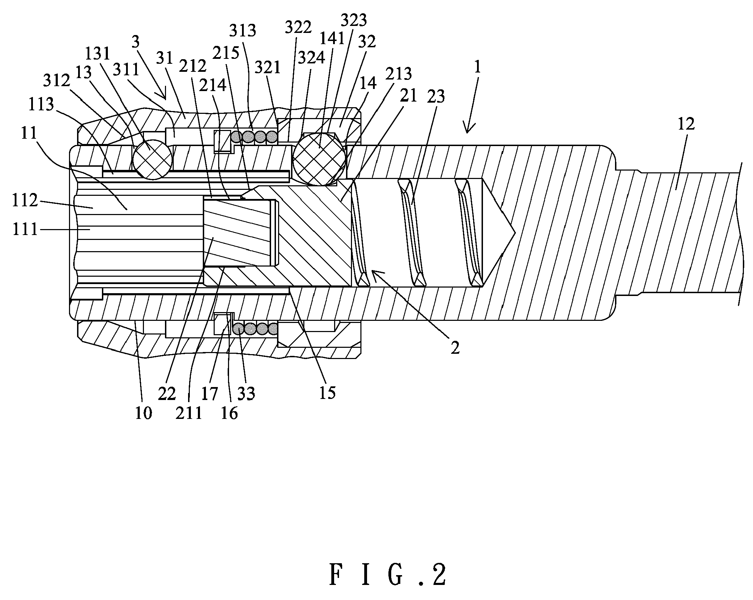

With reference to FIGS 2 and 3, when the quick-change connecting rod assembly has not yet coupled with a woodworking spade bit 4, a polygonal bit 5, or a screwdriver bit 6, the pressing portion 213 of the pressing seat 21 abuts the second positioning ball 141. A portion of the second positioning ball 141 enters the recess 323 of the rear abutment ring 32 and compresses the second spring 33.

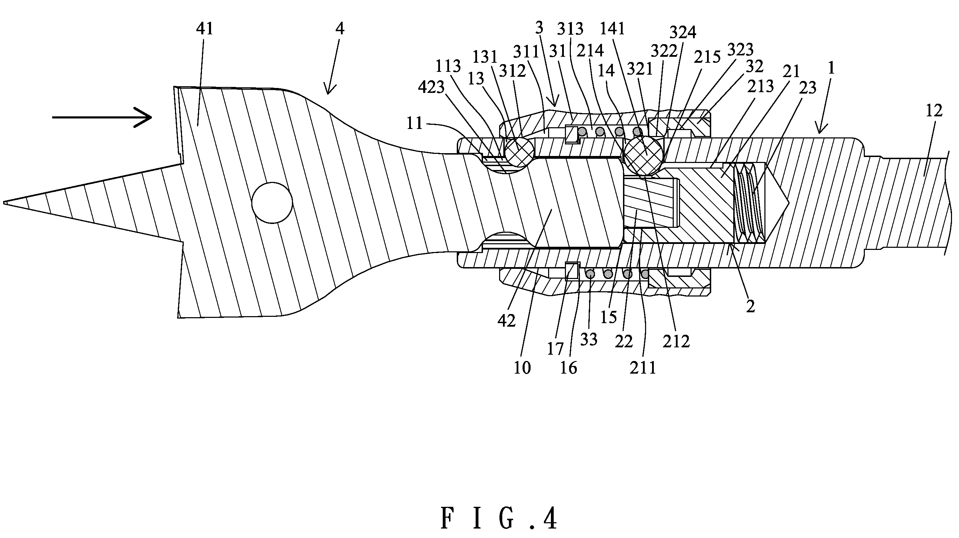

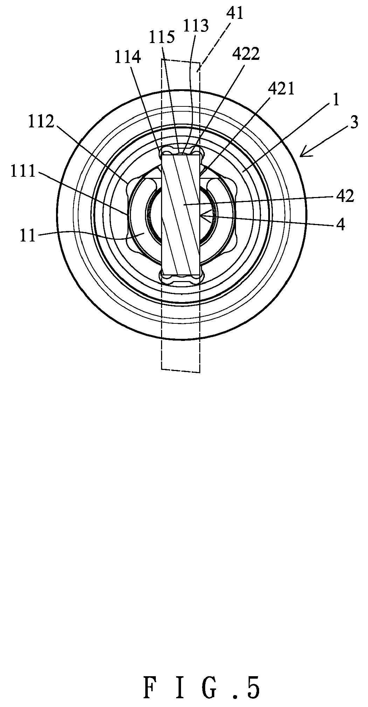

With reference to FIGS. 4 and 5, when it is desired to couple a woodworking spade bit 4 with the quick-change connecting rod assembly, the two edges of the woodworking spade bit 4 are inserted through the coupling hole 11 into the two coupling grooves 113. After the insertion, the pressing seat 21 is moved rearward to compress the first spring 23. The rear end (the flat coupling end 42) of the woodworking spade bit 4 is attracted by the magnet 22 to provide enhanced assembly stability. Furthermore, the recessed portion 212 of the pressing seat 21 is aligned with the second positioning ball 141. Furthermore, the first positioning ball 131 is pressed by the inclined face 312 to engage and position in the notch 423 of the woodworking spade bit 4. The maximum insertion depth of the rear end of the woodworking spade bit 4 is restricted by the shoulder 15 of the coupling hole 11. Furthermore, the second positioning ball 141 can be attracted by the magnet 22 to rapidly move toward the recessed portion 212 of the pressing seat 21. Furthermore, the arrangement of the front inclined guiding face 324 permits the sleeve 31 to move rearward easily under the elasticity of the second spring 33. Thus, smooth operation is provided. Furthermore, the side stop wall 322 of the rear abutment ring 32 abuts the second positioning ball 141 to reliably prevent forward movement of the pressing seat 21. With reference to FIG. 5, during drilling operation, the two edges of the woodworking spade bit 4 presses against the sidewalls 114 of the two coupling grooves 113 to provide sufficient torque.

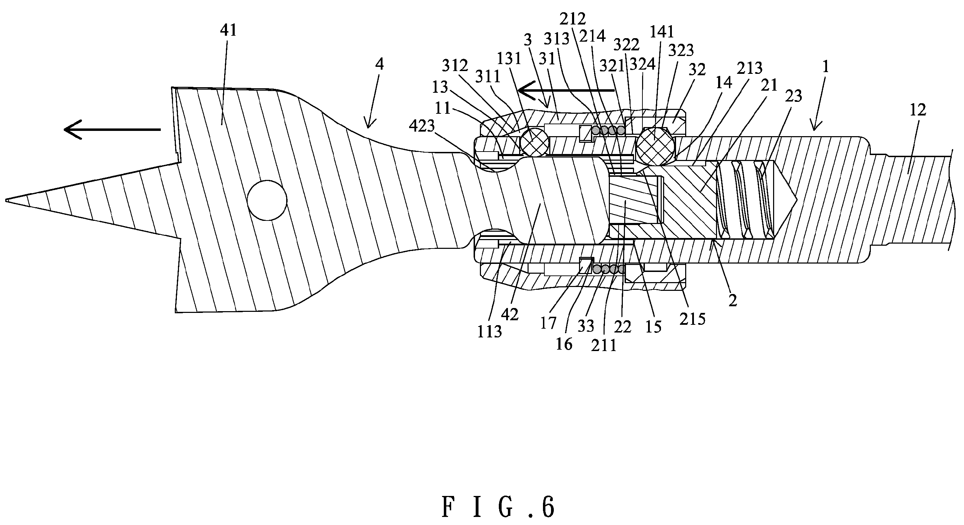

With reference to FIG. 6, when it is desired to remove the woodworking spade bit 4, the sleeve 31 is moved forward, and the side stop wall 322 does not abut the first positioning ball 131. The pressing seat 21 is moved forward under the elasticity of the first spring 23, permitting forward movement of the woodworking spade bit 4. At the same time, the rear end of the woodworking spade bit 4 is still attracted by the magnet 22 to avoid rapid forward ejection of the woodworking spade bit 4, providing enhanced safety. During the forward movement of the pressing seat 21, the inclined guiding face 215 of the pressing seat 21 pushes the second positioning ball 141 to move radially outwards into the recess 323 of the rear abutment ring 32, providing smooth, stable movement.

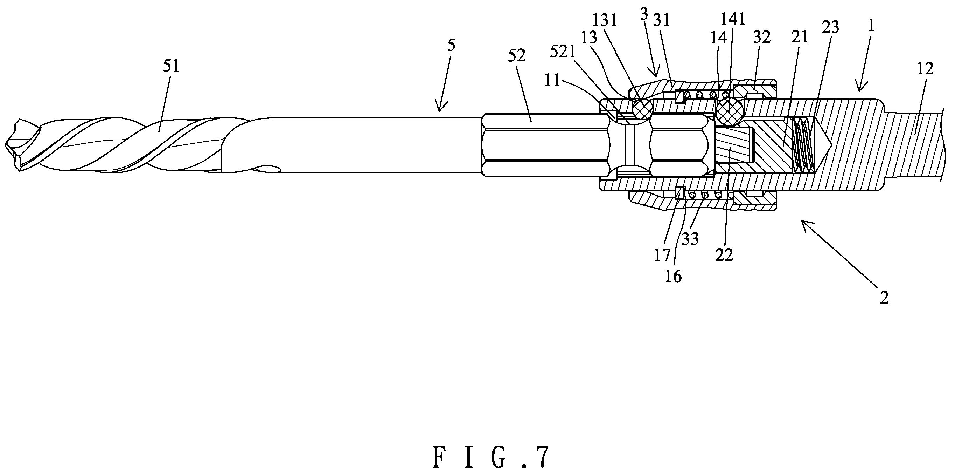

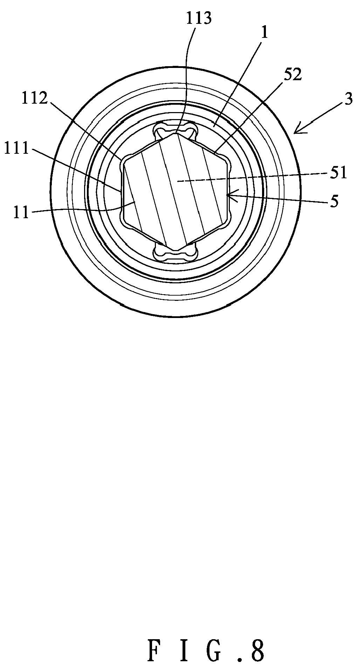

With reference to FIGS. 7 and 8, the coupling hole 11 of the connecting rod 1 can couple with the polygonal coupling end 52 of a polygonal bit 5. The polygonal coupling end 52 presses against the inner wall faces 111 of the connecting rod 1 to provide torque. Detachment of the polygonal bit 5 is similar to that of the woodworking spade bit 4. Similarly, a screwdriver bit 6 can be detachably coupled with the connecting rod 1.

In view of the foregoing, the quick-change connecting rod assembly can couple with a woodworking spade bit 4, a polygonal bit 5, or a screwdriver bit 6, providing wider applications. It is not necessary to process the woodworking spade bit 4 to form a polygonal coupling end, permitting easy manufacturing of the woodworking spade bit 4. The first spring 23 can be a metal spring and does not have to be integrally formed with the pressing seat 21.

Although specific embodiments have been illustrated and described, numerous modifications and variations are still possible without departing from the scope of the invention. The scope of the invention is limited by the accompanying claims.

## Claims

1. A quick-change connecting rod assembly comprising:
a connecting rod including an outer periphery, with the connecting rod including a front end having a coupling hole, with the connecting rod further including a rear end having a shank, with the coupling hole of the connecting rod including a front portion and a rear portion, with the front portion of the coupling hole including a polygonal inner periphery having a plurality of inner wall faces and a plurality of corners, with two coupling grooves defined in the polygonal inner periphery of the coupling hole and diametrically opposed to each other, with each of the two coupling grooves including two sidewalls and a bottom wall between the two sidewalls, with the front end of the connecting rod including a first radial hole intercommunicated with one of the two coupling grooves, with the connecting rod further including a second radial hole located behind the first radial hole and intercommunicated with the rear portion of the coupling hole, with first and second positioning balls respectively received in the first and second radial holes, and with a first abutment ring mounted around the connecting rod and located between the first and second radial holes;
a pressing device including a pressing seat, a magnet, and a first spring, with the pressing seat received in the rear portion of the coupling hole, with the pressing seat including a front end having a receptacle, with the front end of the pressing seat further including a recessed portion formed on an outer periphery thereof delimiting the receptacle and extending rearwards, with the pressing seat further including a pressing portion behind the recessed portion and configured for pressing against the second positioning ball, with the magnet mounted in the receptacle of the pressing seat, and with the first spring providing elasticity for moving the pressing seat; and
a sleeve device including a sleeve, a rear abutment ring, and a second spring, with the sleeve including a receiving hole in a central portion thereof, with the front end of the connecting rod received in the receiving hole of the sleeve, with the receiving hole including a front portion having an inner periphery with an inclined face configured for pressing against the first positioning ball, with the rear abutment ring fixed in a rear portion of the receiving hole, with the rear abutment ring including a front side having a front stop wall, with the rear abutment ring further including an inner periphery having a side stop wall configured for pressing against the second positioning ball, with the inner periphery of the rear abutment ring further including a recess configured for receiving a portion of the second positioning ball, and with the second spring providing elasticity for moving the sleeve.

2. The quick-change connecting rod assembly as claimed in claim 1, with the coupling hole of the connecting rod being hexagonal in cross section, and with the two coupling grooves defined in two diametrically corners of the plurality of corners.

3. The quick-change connecting rod assembly as claimed in claim 1, wherein the connecting rod is connected to a woodworking spade bit, a polygonal bit, or a screwdriver bit.

4. The quick-change connecting rod assembly as claimed in claim 3, with the woodworking spade bit being elongated and including a drilling end on a front end thereof and a flat coupling end behind the drilling end, with the flat coupling end including two opposite wide faces and two opposite narrow faces, with each of the two opposite wide faces having a width slightly smaller than a spacing between the bottom walls of the two coupling grooves, with each of the two opposite narrow faces having a width slightly smaller than a width of each of the two sidewalls of one of the two coupling grooves, with at least one of the two opposite narrow faces including a notch configured for receiving the first positioning ball, with the flat coupling end of the woodworking spade bit detachably inserted into the coupling hole of the connecting rod, and with two edges of the flat coupling end of the woodworking spade bit engaged in the two coupling grooves of the connecting rod.

5. The quick-change connecting rod assembly as claimed in claim 3, with the polygonal bit including a drilling end on a front end thereof, with the screwdriver bit including a bit end on a front end thereof, with each of the polygonal bit and the screwdriver bit including a polygonal coupling end on a rear end thereof for coupling with the coupling hole of the connecting rod, and with the polygonal coupling end including an engagement groove for coupling with the first positioning ball.

6. The quick-change connecting rod assembly as claimed in claim 1, with each of the first and second positioning balls being a steel ball, with the recessed portion of the pressing seat including a notch intercommunicated with the receptacle, wherein the magnet received in the receptacle of the pressing seat has a side exposed via the notch.

7. The quick-change connecting rod assembly as claimed in claim 6, with the pressing seat further including an inclined guiding face located between the recessed portion and the pressing portion and inclining rearwards and radially outwards.

8. The quick-change connecting rod assembly as claimed in claim 6, wherein the rear abutment ring further includes a front inclined guiding face in front of the recess of the rear abutment ring.

9. The quick-change connecting rod assembly as claimed in claim 1, with the coupling hole of the connecting rod having increasing diameters towards the front end of the connecting rod 1 and including a shoulder.

10. The quick-change connecting rod assembly as claimed in claim 1, with the connecting rod further including a groove in the outer periphery thereof, with the first abutment ring received in the groove of the connecting rod, with the receiving hole of the sleeve including a receiving section behind the inclined face of the sleeve, with the receiving section having a diameter larger than the front portion of the receiving hole, with the second spring received in the receiving section and including two ends abutting the first abutment ring and the front stop wall of the rear abutment ring, with the pressing seat made of plastic, with an end of the first spring integrally formed with the pressing seat, and with another end of the first spring abutting a bottom wall of the coupling hole of the connecting rod.
